# EUROPEAN PATENT SPECIFICATION

(11) **EP 2 746 067 B1**
(45) Date of publication and mention of the grant of the patent: **05.04.2017**
(21) Application number: 13196485.0
(22) Date of filing: 10.12.2013
(51) Int. Cl.: B60C 15/06

(54) **Bead reinforcing structure for TBR tire**
Wulstverstärkungsstruktur für TBR-Reifen
Structure de renforcement de talon de pneu TBR

(30) Priority: 18.12.2012 KR 20120011965 U; 07.08.2013 KR 20130093533
(43) Date of publication of application: 25.06.2014
(73) Proprietor: Hankook Tire Co., Ltd., Gangnam-gu, Seoul 135-723 (KR)
(72) Inventor: Lim, Dong Gyu, 305-721 Daejeon (KR)
(74) Representative: Westphal, Mussgnug & Partner Patentanwälte mbB

(56) References cited:
- EP-A2- 0 221 833
- WO-A1-2008/074337
- DE-A1- 3 324 522
- US-A- 4 811 773

## Description

### BACKGROUND OF THE INVENTION

### Field of the Invention

The present invention relates to a bead reinforcing structure for a heavy duty tire, such as a TBR tire, and especially for a tire used under the conditions of high pressure and heavy load. The present invention more particularly relates to a bead reinforcing structure for a heavy duty tire having a bead in which a carcass is turned up to surround a bead core, the bead reinforcing structure having a double reinforcing structure in which inside and outside steel chafers having predetermined inclination angles are disposed inside and outside the carcass to reinforce the carcass from both the inside and outside of the carcass.

### Description of the Related Art

Generally, it is necessary for a pneumatic tire used for a heavy duty vehicle to have a bead reinforcing structure so that the pneumatic tire can endure a heavy load. This is because a pneumatic tire suffers from the strongest stress at an interface portion thereof which is in contact with a wheel joined with a rim and because the breaking down or detachment of the bead is most likely to occur in this interface portion.

The structure of a typical bead includes a bead core which is the inner part, a carcass which is turned up to surround the bead core, and a chafer made of nylon or steel which covers and reinforces the carcass.

Until recently, an effort to develop a technology for improving durability of the bead has been made, and thus dramatic technological advancements have been achieved. There are two technological trends with respect to the bead. A first one is a way of adjusting the shape of a carcass serving as a backbone of a tire. Through this method, it is possible to adjust magnitude and distribution of stress applied to the carcass and to adjust deformation and/or stress of the carcass attributable to movement of a tire while a vehicle is traveling. A second one is a way of improving the physical properties of a rubber adjacent to the carcass, resulting in improvement in the performance of retaining physical properties of the rubber under the same fatigue and temperature conditions.

US Patent Application No. 1986-775004 (US Patent No. 4688616) assigned to Sumitomo Rubber Industries Ltd. discloses a technology concerning the number and positions of reinforcing structures for a bead, and Japanese Patent Application Publication No. 1999-020423 filed by BRIDGESTONE CORP. discloses a technology concerning an attachment position of a steel chafer. Korean Patent Application Publication No. 2012-0063901 discloses a technology in which a plate member is provided in an inner side of a bead core in order to prevent bead wires in the bead core from collapsing and prevent the bead core from coming into contact with a carcass. US Patent No. 4,811,773 filed by BRIDGESTONE CORP. discloses a heavy duty pneumatic radial tire comprising a bead portion reinforcement comprised of a main chafer made from aromatic polyamide fiber cords. The tire has a main chafer and an auxiliary chafer composed of inner cord layers and outer cord layers. German Patent Application Publication No. 33 24 522 filed by Bayer AG discloses a heavy-duty tire for high load having a strongly curved cap and comprising a combination of steel and fiber cord chafers.

As disclosed in the conventional arts, there is a technological trend toward slight reduction in accidents associated with a bead, such as reduction in problems at a turn-up edge and in breaking down of a carcass. However, a fundamental solution to problems occurring in the bead is needed. Especially in a market in which tires that can endure over a 150% load and over 14 bars of tire pressure are demanded, such as China where conventional beads having a well-known structure cannot meet the demand. Accordingly, it is necessary to develop a bead which is fundamentally improved in structure.

The foregoing is intended merely to aid in the understanding of the background of the present invention, and is not intended to mean that the present invention falls within the purview of the related art that is already known to those skilled in the art.

### SUMMARY OF THE INVENTION

Accordingly, the present invention has been made keeping in mind the above problems occurring in the related art, and the present invention is intended to propose a bead reinforcing structure for a heavy duty tire which can greatly alleviate concentration of stress on the edge of a carcass, and fundamentally prevent breaking down of the carcass attributable to the edge of a bead core coming into contact with the carcass.

According to one aspect of the present invention, there is provided a bead reinforcing structure for a heavy duty tire having a bead in which a carcass is turned up to surround a bead core, the bead reinforcing structure being configured such that inside and outside steel chafers having predetermined inclination angles are disposed inside and outside the carcass, respectively to reinforce the carcass from both the inside and outside of the carcass.

The inside and outside steel chafers may intersect each other, forming opposite angles in the range of 0° to 90° therebetween.

The inside and outside steel chafers may have corresponding angles in the same direction, and the corresponding angles are in the range of 0° to 90°.

A height of an end of the inside steel chafer which is near an end of the carcass may be higher or lower than that of the end of the carcass and a height of an end of the outside steel chafer which is near the end of the carcass may be higher or lower than that of the end of the carcass.

The bead reinforcing structure for a heavy duty tire according to the present invention reinforces a bead with use of a double steel chafer structure. Accordingly, it is possible to minimize deformation, like bending, of the bead attributable to external force and tire pressure. Moreover, it is possible to distribute stress by adopting a structure in which the rigidity of the bead reinforcing structure gradually decreases for every unit length from the bead core to a sidewall. Furthermore, it is possible to minimize deformation of the bead, such as decrease in thickness of the bead, attributable to external force or heat.

Yet furthermore, since two steel chafers are arranged to intersect each other to form opposite angles therebetween or to extend in parallel with each other to form corresponding angles, and the inside chafer and the outside chafer limit movement of a carcass by encaging the carcass in therebetween, it is possible to minimize stress applied to an end of the carcass.

Yet furthermore, the structure having opposite angles minimizes deformation of a tire in a widthwise direction even under a heavy load, reducing stress applied to the end of carcass. This leads to an extended lifespan of the bead. Yet furthermore, since the steel chafers arranged to have opposite angles therebetween restrain each other under driving or braking torque during the traveling of a vehicle, the bead reinforcing structure according to the present invention can prolong the lifespan of the carcass.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is an enlarged cross-sectional view illustrating a bead reinforcing structure for a heavy duty tire according to one embodiment of the present invention;
FIG. 2 is an enlarged side view illustrating the bead reinforcing structure for a heavy duty tire according to the embodiment of the present invention; and
FIG. 3 is an enlarged side view illustrating a bead reinforcing structure for a heavy duty tire according to another embodiment of the present invention.

### DETAILED DESCRIPTION OF THE INVENTION

Hereinbelow, preferred embodiments of the present invention will be described in detail with reference to the accompanying drawings. A description on the embodiments of the present invention does not cover details of functions and constructions which are well known in the art.

An embodiment of the present invention relates to a bead reinforcing structure for a heavy duty tire having a bead in which a carcass is turned up to surround a bead core. The bead reinforcing structure has a double reinforcing structure which reinforces a heavy duty tire from inside and outside the carcass, using an inside steel chafer and an outside steel chafer.

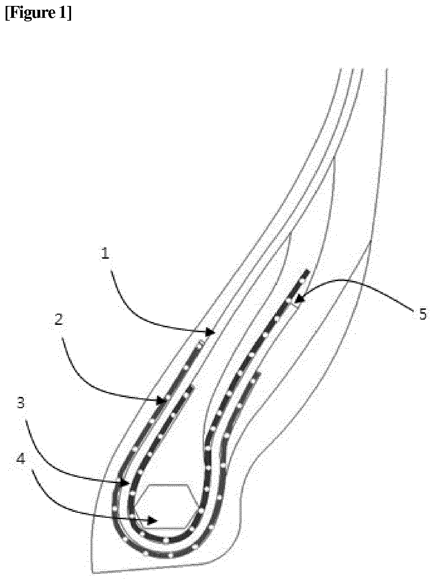

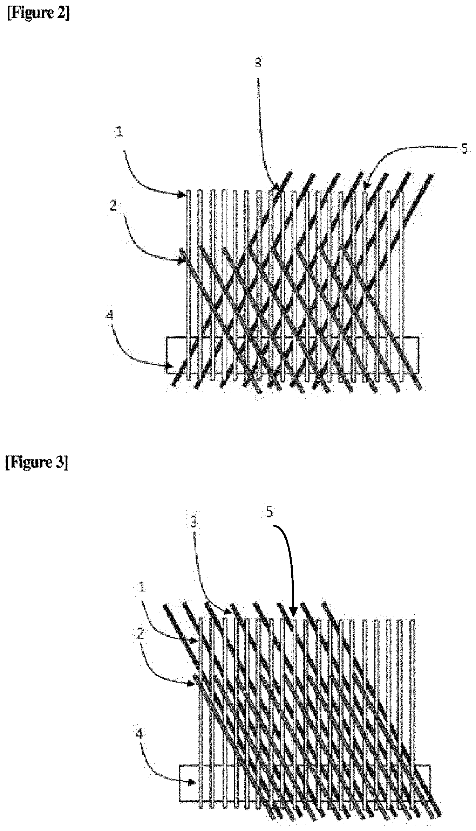

FIG. 1 is an enlarged cross-sectional view illustrating a bead reinforcing structure for a heavy duty tire according to one embodiment of the present invention, and FIG. 2 is an enlarged side view illustrating the bead reinforcing structure for a heavy duty tire according to the present embodiment of the present invention. With reference to FIGS. 1 and 2, the bead reinforcing structure for a heavy duty tire according to the present embodiment includes an inside steel chafer 3 having a predetermined inclination angle which is disposed inside a carcass 1, and an outside steel chafer 2 having a predetermined inclination angle which is disposed outside the carcass 1. The two steel chafers 2 and 3 and the carcass 1 are superimposed on one another while the carcass 1 is disposed between the steel chafers 2 and 3. A laminate made up of the two steel chafers 2 and 3 and the carcass 1 is turned up in a position at which a bead core 4 is located, forming a reinforcing structure.

With reference to FIG. 2, the inside steel chafer 3 and the outside steel chafer 2 are arranged to incline with respect to a vertical or horizontal direction but in opposite inclination directions. That is, the inside steel chafer 3 and the outside steel chafer 2 intersect each other, forming opposite angles in the range of 0° to 90° therebetween. In this structure, the carcass 1 is disposed between steel cords arranged to have opposite angles therebetween.

In this condition, directions of force acting on the steel cords are opposite so as to be offset, and thus the steel cords with a zero angle confine the carcass 1 therebetween, minimizing stress applied to an end 5 of the carcass 1. This double steel chafer, including two steel chafers 2 and 3, restrain each other under load and thus minimizes deformation of the carcass 1 in a width direction. This leads to a decrease in displacement of the carcass 1. For this reason, stress concentrating on the end 5 of the carcass 1 is minimized.

Occasionally, the carcass breaks down, which means that the carcass among the bead cores and the carcass in the bead breaks down. In the bead reinforcing structure according to the present embodiment, since the carcass 1 does not come into direct contact with the bead cores 4, fatigue performance of the carcass 1 increases and wear of the carcass 1 is prevented. This fundamentally prevents breaking down of the carcass 1.

According to the present embodiment, a position of a turned-up end of the inside steel chafer 3 may be higher or lower than the end 5 of the carcass 1. In a tire according to a related art, the carcass has only one end. Accordingly, most failures of the bead are attributed to stress concentrating on the end of the carcass. In the bead reinforcing structure according to the present embodiment, the end of the inside steel chafer 3 is higher or lower than the end 5 of the carcass 1 in a position located outside the bead. Accordingly, it is possible to distribute the stress which is likely to concentrate on the end 5 of the carcass 1 and thus to reduce the stress at the inside steel chafer 3 which is unlikely to receive strong shearing force and tensile force attributable to tire pressure, resulting in reduction in the stress applied to the end 5 of the carcass 1.

A turned-up end of the outside steel chafer 2 may be higher or lower than the end 5 of the carcass 1. That is, it does not matter if the turned-up end of the outside steel chafer 2 is higher or lower than the end 5 of the carcass 1. The structure in which the turned-up end of the outside steel chafer 2 is higher than the end 5 of the carcass 1 can prevent concentration of stress, and the structure in which the turned-up end of the outside steel chafer 2 is lower than the end 5 of the carcass 1 is advantageous in terms of reinforcement complementation of the bead. Both structures have their own advantages, and any structure that is demanded under market conditions may be adopted.

According to the present embodiment, it is preferable that a step difference between a turned-up portion and a turned-down portion of the inside steel chafer 3 and the outside steel chafer 2 be at least 10 mm to alleviate concentration of the stress. Here, the term "step difference" means a difference between the heights of the ends of the outside steel chafer and the carcass, and it is undesirable that both of the ends are positioned with zero step difference. When both of the ends are flush with each other, such a structure is likely to lead to defective products in a manufacturing process and an increase in radial and level force variations, which is disadvantageous in terms of stress concentration.

FIG. 3 is an enlarged side view illustrating a bead reinforcing structure for a heavy duty tire according to another embodiment of the present invention.

In the present embodiment, two steel chafers 2 and 3 disposed outside and inside a carcass 1 incline at corresponding angles, and restrain the carcass 1 interposed therebetween. The outside steel chafer 2 and the inside steel chafer 3 reduce stress applied to an end 5 of the carcass 5. However, the other portions in the present embodiment are similar to those in the embodiment illustrated in FIG. 2 and exhibit the same advantageous effect as those in the embodiment illustrated in FIG. 2.

The bead reinforcing structure according to the present invention can be applied to both types of tires, i.e., tube-type tires and tubeless-type tires. The bead reinforcing structure according to the present invention is a structure that can prevent carcass edge separation attributable to excessive air pressure and overload and prevent the carcass breaking down, and thus can be applied to tires.

In terms of the distribution of the rigidity of the bead, the distribution of the rigidity of the bead reinforcing structure is continuous from the bead core at which the rigidity is highest to a side wall at which the rigidity is lowest. The bead reinforcing structure according to the present invention has a rigidity which gradually decreases for every unit length from the bead core to the side wall. This has the advantage of prolonging the lifespan of the bead.

The bead reinforcing structure according to the present invention contributes to improvement in the safety margin of the carcass of the bead.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A bead reinforcing structure for a heavy duty tire having a bead in which a carcass (1) is turned up to surround a bead core (4), the bead reinforcing structure comprising:
a carcass (1); and
an inside steel chafer (3) having a predetermined inclination angle and an outside steel chafer (2) having a predetermined inclination angle, the inside and outside steel chafers (2, 3) being disposed inside and outside the carcass (1), respectively, thereby reinforcing the bead from the inside and outside of the carcass (1),
wherein a laminate made up of the inside steel chafer 2, the outside steel chafer 3, and the carcass 1 is turned up in a position at which a bead core 4 is located, and
wherein a height of an end of the outside steel chafer (2) which is near the end of the carcass (1) is lower than that of the end of the carcass (1).

2. The bead reinforcing structure for a heavy duty tire according to claim 1, wherein the inside steel chafer (3) and the outside steel chafer (2) intersect each other, forming opposite angles in a range of 0° to 90° therebetween.

3. The bead reinforcing structure for a heavy duty tire according to claim 1, wherein the inside steel chafer (3) and the outside steel chafer (2) have corresponding angles in the same direction, and the corresponding angles are in a range of 0° to 90°.

4. The bead reinforcing structure for a heavy duty tire according to any one of claims 1 to 3, wherein a height of an end of the inside steel chafer (3) which is near an end of the carcass (1) is higher or lower than that of the end of the carcass (1).

## Patentansprüche

1. Wulstverstärkungsstruktur für einen hoch belastbaren Reifen mit einem Wulst, bei dem eine Karkasse (1) umgeschlagen ist, so dass sie einen Wulstkern (4) umgibt, wobei die Wulstverstärkungsstruktur Folgendes aufweist:
eine Karkasse (1) und
ein inneres Stahl-Wulstschutzband (3) mit einem vorbestimmten Neigungswinkel und ein äußeres Stahl-Wulstschutzband (2) mit einem vorbestimmten Neigungswinkel, wobei das innere und das äußere Stahl-Wulstschutzband (2, 3) innen bzw. außen an der Karkasse (1) angeordnet sind, wodurch der Wulst von innerhalb und von außerhalb der Karkasse (1) verstärkt wird,
wobei eine Schichtung, die aus dem inneren Stahl-Wulstschutzband (2), dem äußeren Stahl-Wulstschutzband (3) und der Karkasse (1) zusammengesetzt ist, an einer Position, an der sich ein Wulstkern (4) befindet, umgeschlagen ist, und
wobei die Höhe eines Endes des äußeren Wulstschutzbands (2), das nahe dem Ende der Karkasse (1) ist, niedriger als die des Endes der Karkasse (1) ist.

2. Wulstverstärkungsstruktur für einen hoch belastbaren Reifen nach Anspruch 1, wobei das innere Stahl-Wulstschutzband (3) und das äußere Stahl-Wulstschutzband (2) sich schneiden und dabei dazwischen entgegengesetzte Winkel in einem Bereich von 0° bis 90° bilden.

3. Wulstverstärkungsstruktur für einen hoch belastbaren Reifen nach Anspruch 1, wobei das innere Stahl-Wulstschutzband (3) und das äußere Stahl-Wulstschutzband (2) entsprechende Winkel in derselben Richtung haben und die entsprechenden Winkel in einem Bereich von 0° bis 90° sind.

4. Wulstverstärkungsstruktur für einen hoch belastbaren Reifen nach einem der Ansprüche 1 bis 3, wobei die Höhe eines Endes des inneren Stahl-Wulstschutzbands (3), das nahe einem Ende der Karkasse (1) ist, höher oder niedriger als die des Endes der Karkasse (1) ist.

## Revendications

1. Structure de renfort de talon pour un pneumatique de poids lourd ayant un talon dans lequel une carcasse (1) est retournée pour entourer un noyau de talon (4), cette structure de renfort de talon comprenant :
une carcasse (1), et
un tablier en acier interne (3) ayant un angle d'inclinaison prédéfini et un tablier en acier externe (2) ayant un angle d'inclinaison prédéfini, les tabliers en acier interne et
externe (2, 3) étant respectivement positionnés à l'intérieur et à l'extérieur de la carcasse (1), de façon à renforcer le talon à partir de l'intérieur et de l'extérieur de la carcasse (1),
un élément stratifié constitué par le tablier en acier interne (2), le tablier en acier externe (3) et la carcasse (1) étant replié au niveau de l'endroit où le noyau de talon (4) est situé, et
la hauteur de l'extrémité du tablier en acier externe (2) qui est proche de l'extrémité de la carcasse (1) étant inférieure à celle de l'extrémité de la carcasse (1).

2. Structure de renfort de talon pour un pneumatique de poids lourd conforme à la revendication 1,
dans laquelle
le tablier en acier interne (3) et le tablier en acier externe (2) se coupent en formant entre-eux des angles opposés situés dans la plage
de 0 à 90°.

3. Structure de renfort de talon pour un pneumatique de poids lourd conforme à la revendication 1,
dans laquelle
le tablier en acier interne (3) et le tablier en acier externe (2) ont des angles correspondant dans la même dimension et ces angles correspondants sont situés dans la plage
de 0 à 90°.

4. Structure de renfort de talon pour un pneumatique de poids lourd conforme à l'une des revendications 1 à 3,
dans laquelle
la hauteur de l'extrémité du tablier en acier interne (3) qui est proche de l'extrémité de la carcasse (1) est supérieure ou inférieure à celle de l'extrémité de la carcasse (1).
